# EUROPÄISCHE PATENTSCHRIFT

(11) **EP 4 290 086 B1**
(45) Veröffentlichungstag und Bekanntmachung des Hinweises auf die Patenterteilung: **07.08.2024**
(21) Anmeldenummer: 22178364.0
(22) Anmeldetag: 10.06.2022
(51) Int. Cl.: F15B 13/04, F15B 13/043, F16K 27/02, F16K 31/124, F15B 13/00

(54) **HYDRAULIK-VENTIL MIT STEUERKOLBEN**
HYDRAULIC VALVE WITH CONTROL PISTON
SOUPAPE HYDRAULIQUE POURVUE DE PISTON DE COMMANDE

(43) Veröffentlichungstag der Anmeldung: 13.12.2023
(73) Patentinhaber: Parker Hannifin EMEA S.à.r.l., 1163 Etoy (CH)
(72) Erfinder: Kollnot, Benedikt, 41352 Korschenbroich (DE)
(74) Vertreter: Feucker, Max Martin

(56) Entgegenhaltungen:
- DE-A1- 102018 120 555
- "2-way cartridge valves;Directional functions", ANNOUNCEMENT REXROTH BOSCH GROUP, BOSCH REXROTH, ELCHINGEN, DE, 1 February 2003 (2003-02-01), XP008081964

## Beschreibung

Die vorliegende Erfindung betrifft ein Hydraulik-Ventil, umfassend mindestens einen Anschluss für ein druckbeaufschlagtes Hydraulikfluid, mindestens einen Anschluss für eine Arbeitsleitung, mindestens einen Steueranschluss, ein Schließelement, wobei das Schließelement zumindest zwischen einer ersten Stellung und einer zweiten Stellung beweglich ist, wobei in der ersten Stellung eine Fluidverbindung zwischen zwei Anschlüssen freigegeben ist und in der zweiten Stellung die Fluidverbindung zwischen den zwei Anschlüssen versperrt ist, und mindestens einen Steuerkolben, wobei der Steuerkolben einerseits an dem Schließelement zur Betätigung in einem Arbeitsdruckraum angreift und andererseits aus einem Steuerdruckraum mit einem Steuerdruck beaufschlagbar ist.

Das Hydraulik-Ventil kann beispielsweise als Wegeventil ausgebildet sein, in welchem Fall das Schließelement auch als Stellelement bezeichnet werden kann und der Steuerkolben eine Art Stelleinheit für das Schließelement ausbildet.

Alternativ kann ein solches Hydraulik-Ventil beispielsweise ein Hydraulik-Einbauventil (auch als Cartridge-Ventil bekannt) und einen Ventilblock aufweisen, wobei das Hydraulik-Ventil in diesem Fall eine in den Ventilblock einbringbare Hülse umfasst. Die Hülse bildet zwischen einem oberen Endbereich und einem unteren Endbereich einen Mantel aus, wobei der Mantel mehrere durch Stege getrennte Radialöffnungen und der untere Endbereich eine Stirnöffnung aufweist. Das Schließelement ist zumindest abschnittsweise in der Hülse angeordnet ist, wobei die erste Stellung eine Öffnungsstellung und die zweite Stellung eine Sperrstellung ist. In der Öffnungsstellung ist eine Fluidverbindung zwischen der Stirnöffnung und den Radialöffnungen freigegeben und in der Sperrstellung ist die Fluidverbindung zwischen der Stirnöffnung und den Radialöffnungen versperrt. Das Schließelement weist eine Schließfläche auf, die an den Arbeitsdruckraum angrenzt und der Stirnöffnung abgewandt ist. Das Schließelement ist mechanisch mit einer Steuerfläche gekoppelt, über die das Schließelement mittels des mindestens einen Steuerkolbens direkt betätigbar ist, wobei die Steuerfläche kleiner ist als die Schließfläche. Der mindestens eine Steuerkolben greift also zur Betätigung des Schließelements an der Steuerfläche an.

Der Ventilblock kann beispielsweise eine Bohrung aufweisen, in der das Hydraulik-Einbauventil zumindest teilweise angeordnet ist. Insbesondere weist der Ventilblock einen der Stirnöffnung der Hülse zugeordneten A-Anschluss und einen den Radialöffnungen der Hülse zugeordneten B-Anschluss auf.

Die Bohrung in dem Ventilblock zur Aufnahme der Hülse des Hydraulik-Einbauventils ist in der Regel als eine gestufte Bohrung ausgebildet, wobei die gestufte Bohrung eine Hauptbohrung und eine Aufnahmebohrung aufweist. Im montierten Zustand ist der untere Endbereich der Hülse des Einbauventils in der Aufnahmebohrung der gestuften Bohrung angeordnet. An die Aufnahmebohrung schließt sich eine im Durchmesser kleinere Leitungsbohrung an, die zu einem auch als A-Anschluss bezeichneten Anschluss des Ventilblocks führt. Die Radialöffnungen im Mantel der Hülse sind hingegen im montierten Zustand in der Hauptbohrung der gestuften Bohrung angeordnet, die mit einem auch als B-Anschluss bezeichneten Anschluss des Ventilblocks verbunden ist. Die Ventilblöcke sind Gegenstand der ISO 7368:2016, welche insbesondere die Maße für die gestufte Bohrung des Ventilblocks vorgibt.

Das Schließelement kann die Steuerfläche unmittelbar ausbilden. Es kann aber auch vorgesehen sein, dass das Schließelement mehrteilig ausgebildet ist und ein mit dem Schließelement verbundenes Element die Steuerfläche ausbildet.

Die Steuerfläche kann also einteilig an dem Schließelement, beispielsweise an einem mit dem Schließelement ausgebildeten Vorsprung oder an dem Schließelement umlaufenden Bund ausgebildet sein.

Es ist aber bevorzugt, dass die Steuerfläche an einem als separates Bauteil vorgesehenen Steuerelement ausgebildet ist, welches bevorzugt lösbar mit dem Schließelement verbunden ist. Eine lösbare Verbindung kann beispielsweise durch eine Schraub- oder Rastverbindung gegeben sein. Durch die lösbare Verbindung kann das die Steuerfläche ausbildende Steuerelement an bereits bestehenden Schließelementen nachgerüstet werden. Zudem kann die Montage des Steuerelements durch die lösbare Verbindung vereinfacht werden.

In einer Ausführungsform ist die Steuerfläche an einer Unterseite eines pilzkopfförmigen Fortsatzes des Schließelements ausgebildet. Der Fortsatz weist insbesondere einen Stamm auf, an dessen freiem Ende ein scheibenförmiger, insbesondere radial auskragender Kopf ausgebildet ist, auf dessen Unterseite die Steuerfläche angeordnet ist.

Prinzipiell ist es möglich, dass der mindestens eine Steuerkolben, der mindestens eine Steuerdruckraum für den mindestens einen Steuerkolben und entsprechende Zuleitungen in dem Ventilblock und/oder sogar in der Hülse angeordnet sind. Bevorzugt ist aber eine Deckelanordnung ausgebildet, in der der mindestens eine Steuerdruckraum zumindest teilweise ausgebildet ist und in der der mindestens eine Steuerkolben angeordnet ist, wobei auch die mechanisch starr mit dem Schließelement verbundene Steuerfläche in der Deckelanordnung angeordnet ist. Die Deckelanordnung kann beispielsweise mittels Schrauben mit dem Ventilblock verbunden werden. Mit einer solchen Deckelanordnung ist ein modularer Aufbau des Hydraulik-Einbauventils möglich.

Es kann vorgesehen sein, dass zur Überführung des Schließelements aus der zweiten Stellung in die erste Stellung (oder umgekehrt) der Steuerdruckraum mit dem Steueranschluss verbunden wird, wobei bei entsprechenden Druckverhältnissen aufgrund des in dem Steuerdruckraum anliegenden Druckes der mindestens eine Steuerkolbe verschoben wird und das Schließelement betätigen.

Ein solches Hydraulik-Ventil mit einem Hydraulik-Einbauventil ist beispielsweise aus DE 10 2018 120 555 A1 bekannt, auf welche bezüglich der Ausbildung des Hydraulik-Ventils mit einem Hydraulik-Einbauventil und einem Ventilblock vollumfänglich Bezug genommen wird, insbesondere im Hinblick auf die Ausbildung der Hülse und die Ausbildung des Ventilblocks.

Aus der DE 10 2018 120 555 A1 ist bereits bekannt, die Leckage aus dem Arbeitssystem zu verringern.

Aufgabe der vorliegenden Erfindung ist es, die Leckage aus dem Arbeitssystem noch weiter zu verringern.

Eine Lösung für die Aufgabe wird mit dem Hydraulik-Ventil mit den Merkmalen des unabhängigen Anspruchs angegeben. Weitere Lösungen und vorteilhafte Weiterbildungen des Hydraulik-Ventils sind in den abhängigen Ansprüchen und in der vorhergehenden und nachfolgenden Beschreibung angegeben, wobei einzelne Merkmale der vorteilhaften Weiterbildungen in technisch sinnvoller Weise miteinander kombinierbar sind.

Gelöst wird die Aufgabe insbesondere durch ein Hydraulik-Ventil mit den eingangs genannten Merkmalen, bei dem zwischen dem Arbeitsdruckraum, dem Steueranschluss und dem Steuerdruckraum ein Wechselventil angeordnet ist, so dass der Steuerdruckraum entweder mit dem Steueranschluss oder mit dem Arbeitsdruckraum verbunden ist. Das Wechselventil ist dabei insbesondere so angeordnet, dass ein erster Eingang des Wechselventils mit dem Arbeitsdruckraum verbunden ist, ein zweiter Eingang des Wechselventils mit dem Steueranschluss verbunden ist und ein Ausgang des Wechselventils mit dem Steuerdruckraum verbunden ist. Das Wechselventil ist insbesondere als leckagefreies Sitzventil ausgebildet. Das Wechselventil stellt also nicht nur die Verbindung des Steuerdruckraums mit dem Arbeitsdruckraum oder mit dem Steueranschluss sicher, sondern auch, dass keine Leckage zu dem versperrten Eingang stattfinden kann.

Mit anderen Worten: Die Erfindung sieht in ihrem Grundgedanken vor, dass ein als solches bekanntes Wechselventil so angeordnet ist, dass der Steuerdruckraum, der zum aktiven Betätigen des Steuerkolbens mit Druck beaufschlagt wird, entweder mit dem Steueranschluss, von dem der Steuerdruckraum zur aktiven Betätigung mit Druck beaufschlagt wird, oder mit dem Arbeitsdruckraum verbunden ist. Wenn der Druck am zweiten Eingang des Wechselventils, also der Druck am Steueranschluss, größer ist als der Druck im Arbeitsdruckraum, so ist der Steuerdruckraum mit dem Steueranschluss verbunden und das Schließelement wird durch den Steuerkolben aktiv betätigt, indem der durch die Druckbeaufschlagung in Bewegung versetzte Steuerkolben das Schließelement verschiebt. Wenn hingegen der Druck am ersten Eingang des Wechselventils, also der Druck im Arbeitsdruckraum, größer ist als der Druck am Steueranschluss, so ist der Steuerdruckraum über das Wechselventil mit dem Arbeitsdruckraum verbunden. In diesem Fall kann keine Leckage aus dem Arbeitsdruckraum über den Steuerkolben heraus erfolgen, da der Steuerdruckraum des Steuerkolbens mit dem Arbeitsdruckraum verbunden ist. Das Schließelement kann in diesem Fall durch eine andere Kraftquelle (beispielsweise eine Feder) betätigt werden, wobei der mindestens eine Steuerkolben passiv über das Schließelement in Richtung des Steuerdruckraums bewegt wird.

In einer Ausführungsform kann vorgesehen sein, dass ein Sitz für jeden Steuerkolben vorgesehen ist, so dass in einer Absperrstellung des Steuerkolbens der Arbeitsdruckraum zu dem Steuerdruckraum des Steuerkolbens fluiddicht abgesperrt ist. In diesem Fall wären also zwei Maßnahmen ergriffen (Sitz für Steuerkolben und Wechselventil), mit denen eine Leckage aus dem Steuerdruckraum hin zum Steueranschluss verhindert wird.

Die Erfindung betrifft auch eine hydraulische Schaltungsanordnung mit einem erfindungsgemäßen Hydraulik-Ventil, wobei ein erstes Steuerventil vorgesehen ist, über welches der Arbeitsdruckraum mit einem Tank verbindbar ist. Das erste Steuerventil kann als hydraulisch betätigbares Steuerventil ausgebildet sein.

Das erste Steuerventil ist insbesondere ein 3/2-Wegeventil, welches in einer ersten Stellung die Arbeitsleitung mit dem Arbeitsdruckraum verbindet, und welches in einer zweiten Stellung den Arbeitsdruckraum mit dem Tank verbindet.

Die Erfindung sowie das technische Umfeld werden im Folgenden anhand der Figuren beispielhaft erläutert. Es zeigen schematisch
- Figur 1:: eine Schaltungsanordnung mit einem Hydraulik-Ventil,
- Figur 2:: eine Schnittansicht durch ein Hydraulik-Einbauventil eines Hydraulik-Ventils und
- Figur 3:: einen Querschnitt durch das Hydraulik-Einbauventil.

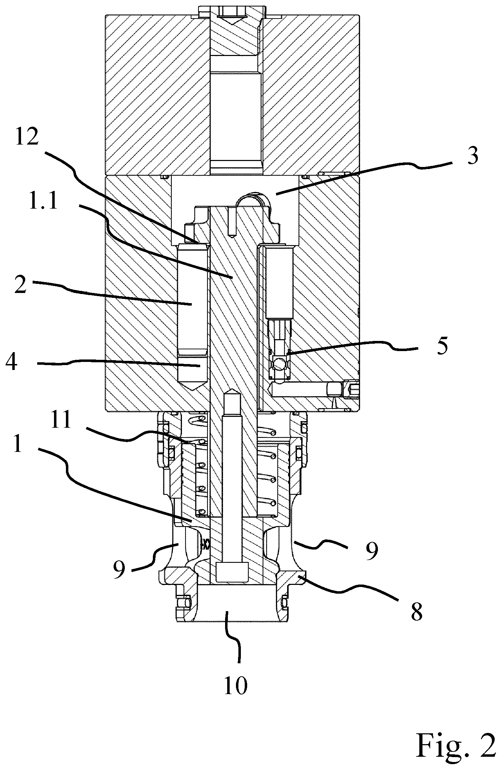

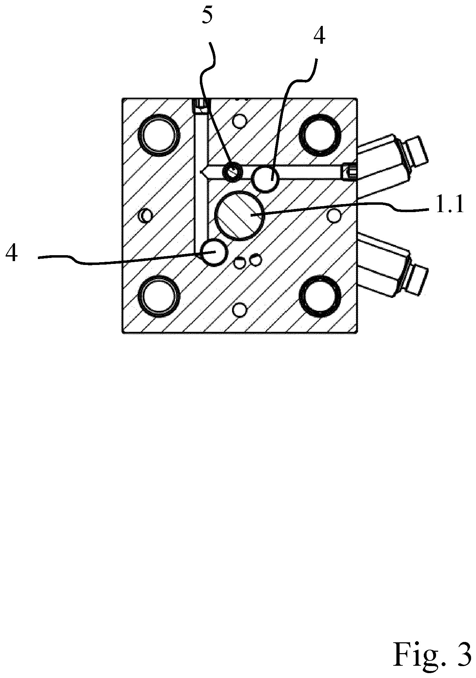

Das in den Figuren 2 und 3 dargestellte Hydraulik-Einbauventil umfasst ein Schließelement 1, welches in einer Hülse 8 verschiebbar angeordnet ist. Die Hülse 8 weist Radialöffnungen 9 auf, die durch Stege voneinander getrennt sind. Die Hülse 8 weist zudem eine Stirnöffnung 10 auf. In einem in einem Ventilblock montierten Zustand ist die Stirnöffnung 10 einem auch als A-Anschluss bezeichneten Anschluss A für ein druckbeaufschlagtes Fluid zugeordnet. Die Radialöffnungen 9 sind im montierten Zustand einem als B-Anschluss bezeichneten Anschluss B für eine Arbeitsleitung zugeordnet.

In einer Schließstellung wird das Schließelement 1 von der Feder auf die Stirnöffnung 10 gedrückt, so dass eine Fluidverbindung zwischen der Stirnöffnung 10 und den Radialöffnungen 9 verschlossen ist. In einer Öffnungsstellung ist hingegen eine Fluidverbindung zwischen der Stirnöffnung 10 und den Radialöffnungen 9 gegeben.

Das Schließelement 1 weist einen in der Hülse 8 angeordneten Abschnitt und ein an dem in der Hülse 8 angeordneten Abschnitt lösbar befestigtes Steuerelement 1.1 auf. Das Steuerelement 1.1 weist ein pilzkopfförmiges Ende auf, welches in einer Deckelanordnung angeordnet ist. An einer Unterseite des pilzkopfförmigen Endes ist eine Steuerfläche 12 ausgebildet.

Der das pilzkopfförmige Ende umgebende Raum ist entlang des stiftförmigen Abschnitts des Steuerelements 1.1 mit dem Raum oberhalb des in der Hülse 8 angeordneten Abschnitts des Schließelements 1 strömungstechnisch verbunden. Dieser Raum wird als Arbeitsdruckraum 3 bezeichnet.

Der in der Hülse 8 angeordnete Abschnitt des Schließelements 1 weist eine Schließfläche 11 auf, die von einem in dem Arbeitsdruckraum 3 anliegenden Fluid mit Druck beaufschlagt wird, wodurch das Schließelement 1 in seine Schließstellung gebracht wird.

An die Steuerfläche 12 auf der Unterseite des pilzkopfförmigen Endes des Steuerelements 1.1 greift ein Steuerkolben 2 an, welcher von einem Steuerdruckraum 4 aus mit Druck beaufschlagt werden kann, wobei der Steuerdruckraum 4 im montierten Zustand mit einem Steueranschluss X verbunden beziehungsweise verbindbar ist. Durch Druckbeaufschlagung des Steuerdruckraums 4 kann also das Schließelement 1 in seine Öffnungsstellung überführt werden. Ein solches auch als Cartridge-Ventil bezeichnetes Hydraulik-Einbauventil ist aus DE 10 2018 120 555 A1 bekannt.

Die vorliegende Erfindung schlägt nun vor, dass zwischen dem Arbeitsdruckraum 3, dem Steueranschluss X und dem Steuerdruckraum 4 ein Wechselventil 5 angeordnet ist, welches sicherstellt, dass der Steuerdruckraum 4 entweder mit dem Steueranschluss X oder mit dem Arbeitsdruckraum 3 verbunden ist. Da solche Wechselventile 5 standardgemäß leckagefrei ausgebildet sind, ist sichergestellt, dass bei geschlossenem Schließelement 1 keine Leckage aus dem Arbeitsdruckraum 3 entlang des Steuerkolbens 2 stattfinden kann, da in diesem Fall der Arbeitsdruckraum 3 und der Steuerdruckraum 4 sich auf demselben Druckniveau befinden. Aus Figur 3 ist noch zu erkennen, dass das Hydraulik-Einbauventil zwei Steuerkolben 2 aufweist, die über eine gemeinsame Leitung mit dem Steueranschluss X verbindbar sind und mit dem Wechselventil 5 verbunden sind.

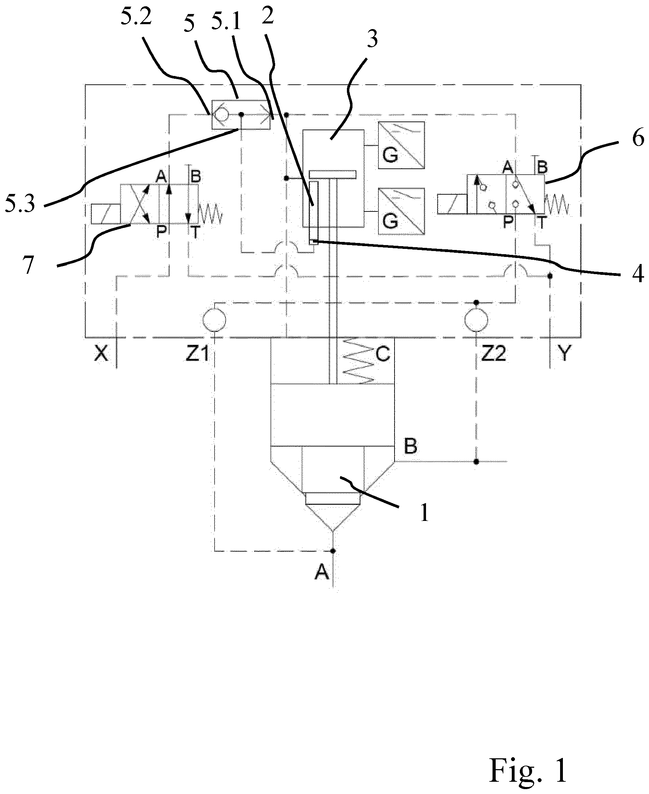

Aus dem hydraulischen Schaltplan der Figur 1 geht hervor, dass die hydraulische Schaltungsanordnung neben dem Hydraulik-Ventil ein erstes Steuerventil 6 und ein zweites Steuerventil 7 umfasst. Das erste, als 3/2-Wegeventil ausgebildete Steuerventil 6 ist direkt mit dem Arbeitsdruckraum 3 und damit mit einem ersten Eingang 5.1 des Wechselventils 5 verbunden. Das zweite, ebenfalls als 3/2-Wegeventil ausgebildete Steuerventil 7 ist zwischen dem Steueranschluss X und einem zweiten Eingang 5.2 des Wechselventils 5 angeordnet. Es ist auch zu erkennen, dass ein Ausgang 5.3 des Wechselventils 5 mit dem Steuerdruckraum 4 verbunden ist.

In dem in der Figur 1 dargestellten Schaltzustand ist der Steuerdruckraum 4 über das Wechselventil 5 mit dem Arbeitsdruckraum 3 verbunden, wobei sich das Schließelement 1 in einer Schließstellung befindet, in welche das Schließelement 1 durch die Feder vorgespannt ist. Das erste Steuerventil 6 ist dabei so gestaltet, dass eine Druckentlastung zu einem Tankanschluss gegeben ist. Wird nun der Druck am Steueranschluss X so weit erhöht, dass er größer ist als der Druck im Arbeitsdruckraum 3, so schaltet das Wechselventil 5 um, wodurch der Steueranschluss X mit dem Steuerdruckraum 4 verbunden wird. Aufgrund des in dem Steuerdruckraum 4 anliegenden Drucks wird der Steuerkolben 2 verschoben und somit das Schließelement 1 betätigt, welches somit in seine Öffnungsstellung überführt wird. In der Öffnungsstellung ist eine Fluidverbindung zwischen dem Anschluss A und dem Anschluss B gegeben.

### Bezugszeichenliste

- 1: Schließelement
- 1.1: Steuerelement
- 2: Steuerkolben
- 3: Arbeitsdruckraum
- 4: Steuerdruckraum
- 5: Wechselventil
- 5.1: erster Eingang
- 5.2: zweiter Eingang
- 5.3: Ausgang
- 6: erstes Steuerventil
- 7: zweites Steuerventil
- 8: Hülse
- 9: Radialöffnung
- 10: Stirnöffnung
- 11: Schließfläche
- 12: Steuerfläche
- A: Anschluss für druckbeaufschlagtes Fluid
- B: Anschluss für Arbeitsleitung
- X: Steueranschluss

## Patentansprüche

1. Hydraulik-Ventil, umfassend zumindest
- mindestens einen Anschluss (A) für ein druckbeaufschlagtes Hydraulikfluid,
- mindestens einen Anschluss (B) für eine Arbeitsleitung,
- mindestens einen Steueranschluss (X),
- ein Schließelement (1), wobei das Schließelement (1) zumindest zwischen einer ersten Stellung und einer zweiten Stellung beweglich ist, wobei in der ersten Stellung eine Fluidverbindung zwischen zwei Anschlüssen (A, B) freigegeben ist und in der zweiten Stellung die Fluidverbindung zwischen den zwei Anschlüssen (A, B) versperrt ist,
- mindestens einen Steuerkolben (2), wobei der Steuerkolben (2)
• einerseits an dem Schließelement (1) zur Betätigung in einem Arbeitsdruckraum (3) angreift und
• andererseits aus einem Steuerdruckraum (4) mit einem Steuerdruck beaufschlagbar ist,
**dadurch gekennzeichnet, dass**
zwischen dem Arbeitsdruckraum (3), dem Steueranschluss (X) und dem Steuerdruckraum (4) ein Wechselventil (5) angeordnet ist, so dass der Steuerdruckraum (4) entweder mit dem Steueranschluss (X) oder mit dem Arbeitsdruckraum (3) verbunden ist.

2. Hydraulik-Ventil nach Anspruch 1, wobei ein erster Eingang (5.1) des Wechselventils (5) mit dem Arbeitsdruckraum (3) verbunden ist, ein zweiter Eingang (5.2) des Wechselventils (5) mit dem Steueranschluss (X) verbunden ist und ein Ausgang (5.3) des Wechselventils (5) mit dem Steuerdruckraum (4) verbunden ist.

3. Hydraulik-Ventil nach einem der vorhergehenden Ansprüche, wobei ein Sitz für jeden Steuerkolben (2) vorgesehen ist, so dass in einer Absperrstellung des Steuerkolbens (2) der Arbeitsdruckraum (3) zu dem Steuerdruckraum (4) des Steuerkolbens (2) fluiddicht abgesperrt ist.

4. Hydraulik-Ventil nach einem der vorhergehenden Ansprüche, wobei das Hydraulik-Ventil ein Hydraulik-Einbauventil und einen Ventilblock aufweist, umfassend
- eine in den Ventilblock einbringbare Hülse (8), wobei
- die Hülse (8) zwischen einem oberen Endbereich und einem unteren Endbereich einen Mantel ausbildet, wobei der Mantel mehrere durch Stege getrennte Radialöffnungen (9) und der untere Endbereich eine Stirnöffnung (10) aufweist, und
- das Schließelement (1) zumindest abschnittsweise in der Hülse (8) angeordnet ist,
- die erste Stellung eine Öffnungsstellung und die zweite Stellung eine Sperrstellung ist, wobei in der Öffnungsstellung eine Fluidverbindung zwischen der Stirnöffnung (10) und den Radialöffnungen (9) freigegeben ist und in der Sperrstellung die Fluidverbindung zwischen der Stirnöffnung (10) und den Radialöffnungen (9) versperrt ist,
- das Schließelement (1) eine Schließfläche (11) aufweist, die an den Arbeitsdruckraum (3) angrenzt und der Stirnöffnung (10) abgewandt ist, und
- das Schließelement (1) mechanisch mit einer Steuerfläche (12) gekoppelt ist, über die das Schließelement (1) direkt betätigbar ist, wobei die Steuerfläche (12) kleiner ist als die Schließfläche (11) und der mindestens eine Steuerkolben (6) zur Betätigung des Schließelements (4) an der Steuerfläche (12) angreift.

5. Hydraulik-Ventil nach Anspruch 4, umfassend eine Deckelanordnung, wobei die Steuerfläche (12), der mindestens eine Steuerkolben (2), sowie der mindestens eine Steuerdruckraum (4) für den mindestens einen Steuerkolben (2) in der Deckelanordnung angeordnet sind.

6. Hydraulik-Ventil nach einem der Ansprüche 1 bis 3, wobei das Hydraulik-Ventil als Wegeventil ausgebildet ist.

7. Hydraulische Schaltungsanordnung mit einem Hydraulik-Ventil gemäß einem der vorhergehenden Ansprüche, wobei ein erstes Steuerventil (6) vorgesehen ist, über welches der Arbeitsdruckraum (3) mit einem Tank verbindbar ist.

8. Schaltungsanordnung nach Anspruch 7, wobei das erste Steuerventil (6) ein hydraulisch betätigbares Steuerventil ist.

## Claims

1. A hydraulic valve, comprising at least
- at least one connection (A) for a pressurised hydraulic fluid,
- at least one connection (B) for a working line,
- at least one control connection (X),
- a closing element (1), wherein the closing element (1) can be moved at least between a first position and a second position, wherein a fluid connection between two connections (A, B) is released in the first position and the fluid connection between the two connections (A, B) is blocked in the second position,
- at least one control piston (2), wherein the control piston (2)
• on the one hand engages with the closing element (1) for actuation in a working pressure chamber (3) and
• on the other hand can be subjected to a control pressure from a control pressure chamber (4),
**characterised in that**
a shuttle valve (5) is arranged between the working pressure chamber (3), the control connection (X) and the control pressure chamber (4), so that the control pressure chamber (4) is connected either to the control connection (X) or to the working pressure chamber (3).

2. The hydraulic valve according to claim 1, wherein a first inlet (5.1) of the shuttle valve (5) is connected to the working pressure chamber (3), a second inlet (5.2) of the shuttle valve (5) is connected to the control connection (X) and an outlet (5.3) of the shuttle valve (5) is connected to the control pressure chamber (4).

3. The hydraulic valve device according to any one of the preceding claims, wherein a seat is provided for each control piston (2), so that in a shut-off position of the control piston (2) the working pressure chamber (3) is shut off fluid-tight from the control pressure chamber (4) of the control piston (2).

4. The hydraulic valve according to any one of the preceding claims, wherein the hydraulic valve comprises a hydraulic built-in valve and a valve block, comprising
- a sleeve (8) which can be introduced into the valve block, wherein
- the sleeve (8) forms a jacket between an upper end region and a lower end region, wherein the jacket comprises a plurality of radial openings (9) separated by webs and the lower end region comprises a face opening (10), and
- the closing element (1) is arranged at least in sections in the sleeve (8),
- the first position is an open position and the second position is a shut-off position, wherein a fluid connection between the face opening (10) and the radial openings (9) is released in the open position and the fluid connection between the face opening (10) and the radial openings (9) is shut off in the shut-off position,
- the closing element (1) comprises a closing surface (11), which is adjacent to the working pressure chamber (3) and faces away from the face opening (10), and
- the closing element (1) is mechanically coupled with a control surface (12), via which the closing element (1) can be directly actuated, wherein the control surface (12) is smaller than the closing surface (11) and the at least one control piston (6) engages with the control surface (12) for the actuation of the closing element (4).

5. The hydraulic valve according to claim 4, comprising a cover arrangement, wherein the control surface (12), the at least one control piston (2), and the at least one control pressure chamber (4) for the at least one control piston (2) are arranged in the cover arrangement.

6. The hydraulic valve according to any one of claims 1 to 3, wherein the hydraulic valve is constituted as a directional valve.

7. A hydraulic circuit arrangement with a hydraulic valve according to any one of the preceding claims, wherein a first control valve (6) is provided, via which the working pressure chamber (3) can be connected to a tank.

8. The circuit arrangement according to claim 7, wherein the first control valve (6) is a hydraulically operable control valve.

## Revendications

1. Soupape hydraulique, comprenant au moins
- au moins un raccordement (A) pour un fluide hydraulique alimenté par pression,
- au moins un raccordement (B) pour une conduite de travail,
- au moins un raccordement de commande (X),
- un élément de fermeture (1), dans laquelle l'élément de fermeture (1) est mobile au moins entre une première position et une deuxième position, dans laquelle une liaison fluidique entre deux raccordements (A, B) est libérée dans la première position, et la liaison fluidique est bloquée entre les deux raccordements (A, B) dans la seconde position,
- au moins un piston de commande (2), dans laquelle le piston de commande (2)
• se met d'une part en prise sur l'élément de fermeture (1) pour l'actionnement dans un espace de pression de travail (3) et
• peut être alimenté d'autre part avec une pression de commande venant d'un espace de pression de commande (4),
**caractérisé en ce**
**qu'**une soupape à deux voies (5) est agencée entre l'espace de pression de travail (3), le raccordement de commande (X) et l'espace de pression de commande (4), de façon à ce que l'espace de pression de commande (4) soit relié soit au raccordement de commande (X), soit à l'espace de pression de travail (3).

2. Soupape hydraulique selon la revendication 1, dans laquelle une première entrée (5.1) de la soupape à deux voies (5) est reliée à l'espace de pression de travail (3), une seconde entrée (5.2) de la soupape à deux voies (5) est reliée au raccordement de commande (X) et une sortie (5.3) de la soupape à deux voies (5) est reliée à l'espace de pression de commande (4).

3. Soupape hydraulique selon l'une des revendications précédentes, dans laquelle un siège pour chaque piston de commande (2) est prévu, de façon à ce que dans une position d'arrêt du piston de commande (2), l'espace de pression de travail (3) soit bloqué en étanchéité aux fluides par rapport à l'espace de pression de commande (4) du piston de commande (2).

4. Soupape hydraulique selon au moins l'une ou plusieurs des revendications précédentes, dans laquelle la soupape hydraulique présente une soupape hydraulique intégrée et un bloc de soupapes, comprenant
- un manchon (8) pouvant être introduit dans le bloc de soupapes, dans laquelle
- le manchon (8) forme une enveloppe entre une partie d'extrémité supérieure et une partie d'extrémité inférieure, dans laquelle l'enveloppe présente plusieurs ouvertures radiales (9) séparées par des montants et la partie d'extrémité inférieure présente une ouverture avant (10), et
- l'élément de fermeture (1) est disposé au moins par tronçons dans le manchon (8),
- la première position est une position d'ouverture et la seconde position est une position de blocage, dans laquelle une liaison fluidique entre l'ouverture avant (10) et les ouvertures radiales (9) est libérée dans la position d'ouverture et la liaison fluidique est bloquée entre l'ouverture avant (10) et les ouvertures radiales (9) dans la position de blocage,
- l'élément de fermeture (1) présente une surface de fermeture (11) qui est délimitée contre l'espace de pression de travail (3) et est détournée de l'ouverture avant (10), et
- l'élément de fermeture (1) est couplé mécaniquement à une surface de commande (12), par laquelle l'élément de fermeture (1) peut être actionné directement, dans laquelle la surface de commande (12) est plus petite que la surface de commande (11) et l'au moins un piston de commande (6) se met en prise sur la surface de commande (12) pour l'actionnement de l'élément de fermeture (4).

5. Soupape hydraulique selon la revendication précédente 4, comprenant un agencement de couvercle, dans laquelle la surface de commande (12), l'au moins un piston de commande (2), ainsi que l'au moins un espace de pression de commande (4) pour l'au moins un piston de commande (2) sont disposés dans l'agencement de couvercle.

6. Soupape hydraulique selon l'une des revendications 1 à 3, dans laquelle la soupape hydraulique est conçue en tant que soupape deux voies.

7. Agencement de branchement hydraulique avec une soupape hydraulique selon l'une des revendications précédentes, dans lequel une première soupape de commande (6) est prévue par laquelle l'espace de pression de travail (3) peut être relié à un réservoir.

8. Agencement de branchement selon la revendication 7, dans lequel la première soupape de commande (6) est une soupape de commande pouvant être actionnée hydrauliquement.
